Europäisches Patentamt

European Patent Office

Office européen des brevets

(19)

(11) Veröffentlichungsnummer: **0 206 100**
**B1**

(12) **EUROPÄISCHE PATENTSCHRIFT**

(45) Veröffentlichungstag der Patentschrift: **22.08.90**

(21) Anmeldenummer: **86107907.7**

(22) Anmeldetag: **10.06.86**

(51) Int. Cl.$^5$: **B 29 C 67/24,** B 29 C 45/56,
B 29 C 67/22

(54) Verfahren und Vorrichtung zum Herstellen von Formteilen aus einem massiven oder mikrozellularen Kunststoff, insbesondere Polyurethan bildenden, fliessfähigen Reaktionsgemisch aus mindestens zwei fliessfähigen Reaktionskomponenten.

(30) Priorität: **22.06.85 DE 3522377**

(43) Veröffentlichungstag der Anmeldung:
**30.12.86 Patentblatt 86/52**

(45) Bekanntmachung des Hinweises auf die
Patenterteilung:
**22.08.90 Patentblatt 90/34**

(84) Benannte Vertragsstaaten:
**DE FR GB IT**

(56) Entgegenhaltungen:
**EP-A-0 139 098
DE-A-1 948 999
DE-A-2 909 738
DE-A-2 914 076
DE-A-3 020 754
US-A-3 909 169**

**PATENT ABSTRACTS OF JAPAN, Band 9, Nr. 226 (M-412)1949r, 12. September 1985; & JP-A-60 83 820 (HITACHI SEISAKUSHO K.K.) 13-05-1985**

(73) Patentinhaber: **BAYER AG
D-5090 Leverkusen 1 Bayerwerk (DE)**

(72) Erfinder: **Boden, Heinrich
Sperberweg 14
D-5090 Leverkusen 3 (DE)**
Erfinder: **Schneider, Walter, Dipl.-Ing.
Christian-Heesen-Strasse 21
D-5063 Overath 6 (DE)**

Courier Press, Leamington Spa, England.

EP 0 206 100 B1

**Beschreibung**

Die Erfindung betrifft eine Verfahren zum Herstellen von Formteilen aus einem massiven oder mikrozelluaren Kunststoff, insbesondere Polyurethan bildenden, fließfähigen Reaktionsgemisch aus mindestens zwei fließfähigen Reaktionskomponenten, wobei ein Formwerkzeug mittels einer zugeordneten Schließeinheit in eine erste Schließstellung gefahren wird, in welcher die Formwerkzeughälften größeren Abstand voneinander aufweisen als in einer zweiten, endgültigen Schließstellung, wobei während dieser ersten Schließstellung das Reaktionsgemisch in der Formhohlraum eingetragen wird und nach beendetem Eintrag durch Fahren der Formwerkzeughälten in die endgültige Schließstellung ein höherer Druck in Formhohlraum aufgebaut wird als während des Eingtragvorgangs darin herrschte, und wobei das Forwerkzeug bis zur Beendigung des Aushärtvorganges des Formteils geschlossen gehalten, dann geöffnet und das Formteil entnommen wird.

die Erfindung betrifft ebenfalls eine Vorrichtung gemäß Oberbegriff des Auspruchs 4.

Die Erfindung bezweckt das Aufbringen eines Nachdruckes auf das im Formwerkzeug im Entstehen begriffene Formteil, im Einfallstellen und andere Oberflächenfehler zu vermeiden. Ein solcher Druckaufbau ist insbesondere bei der sogenannten RIM-Technik (Reaction-Injection-Moulding) in vielen Fällen erforderlich. Man hat versucht, diesen Nachdruck dadurch zu erzeugen, daß man das Reaktionsgemisch enorm stark mit Gas beladen hat. Diese Maßnahme bringt aber nur den gewünschten Effekt der Vermeidung von Oberflächenfehlern bei Formteilen mit Wandstärken oberhalb etwa 2,5 mm. Bei langen Fließwegen jedoch und beim Durchströmen von Formhohlraumabschnitten geringer Dicke bewirkt der entstehende Staudruck ein partielles, unerwünschtes Lösen der Gase im Reaktionsgemisch. Das gelöste Gas steht aber bei der sehr schnellen Verfestigung des Reaktionsgemisches und der einsetzenden Reaktionsschwindung nun nicht mehr zum Druckausgleich zur Verfügung.

Bei zu langsamer Einströmgeschwindigkeit bzw. zu langer Füllzeit beginnt noch während des Gemischeintrages der Viskositätsanstieg durch die einsetzende Verfestigungsreaktion mit Druckaufbau vorzugsweise im angußnahen Bereich. Ein gleichmäßiger Nachdruckaufbau während der Aushärtung von beispielsweise 70 bar oder darüber kann mit dieser Art einer Nachdrucksteuerung nicht erzielt werden.

Bei zellbildenden Reaktionsgemischen hat man auch versucht, mit einsprechender Überfüllung zu arbeiten. Der Formteilwerkstoff weist dann eine unerwünscht hohe Dichte auf, und durch die Überfüllung wird eine erhebliche Materialmenge verschwendet. Bei dieser Technik hat man weniger steife Formwerkzeuge und Schließeinheiten verwendet, um deren "Atmung" auszunutzen. Starker, ungleichmäßiger Austrieb, der geringe Zuhaltedruck und schlecht reproduzierbare Maßgenauigkeit verhinderten die Großserien-Herstellung von Formteilen hoher Qualität. Wegen des geringen erzielbaren Druckniveaus konnte das Entstehen von Blasen an der Oberfläche des Formteils im Bereich von scharfkantigen Übergängen nicht mit Sicherheit unterbunden werden.

Man hat auch schon versucht (DE—OS 28 29 016 entsprechend US—PS 4 256 679), mit einem Speicherkolben zu arbeiten, welcher zwischen Mischkopf und eigentlichem Formhohlraum angeordnet ist. Hierbi erweitert man den Formhohlraum um das Speichervolumen vor dem Gemischeintrag und drückt anschließend nach, wobei dann ein erhöhter Druck entsteht. Markierungen auf dem Formteil sind nicht zu vermeiden. Diese Nachdrucksteuerung wurde zusätzlich durch Eindringen und Verfestigung von Reaktionsgemisch in den Dichtspalt zwischen Speichkolben und Speicherzylinder beeinträchtigt. Bei geometrisch diffizilen und insbesondere langen Formteilen läßt sich diese Ausführungsform kaum anwenden, weil durch die fortschreitende Verfestigung die Druckfortpflanzung über den gesamten Formhohlraum nicht mehr gewährleistet ist.

Schließlich hat man noch versucht (EP—PS 24 610 entsprechend US—PS 4 314 955), Formwerkzeuge mit elastischen Innenwandbereichen zu verwenden, wobei die entsprechenden Bereich rückseitig beaufschlagbar sind. Der Nachteil solcher Formerwerkzeuge besteht darin, daß die gleichmäßige Beheizung bzw. Kühlung der elastischen Wandbereiche Schwierigkeiten bereitet. Zum anderen tritt auch hier der Mangel auf, daß die Maßgenauigkeit der Formteile nicht gewährleistet ist.

Aus JP—A—6 083 820, auf welcher der Oberbegriffs des Anspruchs 1 basiert, ist eine Schließeinheit bekannt, welche nur die Funktion besitzt, die Formwerkzeughälften zu tragen und zusammenzupressen. Jede Formwerkzeughälfte weist einen hydraulisch betätigbaren Formstempel auf, welcher gegen Spiralfedern wirkt. Für die Füllstellung werden die Formstempel durch die Spiralfedern sowie die Hydraulikzylinder gegen Anschläge gedrückt, um eine erste Schließstellung zu erreichen. Nach dem Füllen werden die Hydraulikzylinder in entgegengesetzter Richtung beaufschlagt, so daß die Formstempel sich einander nähern und die endgültige Schließstellung einnehmen. Dabei arbeiten zum Erreichen dieser Endstellung die Hydraulikzylinder gegen die Kraft der Spiralfedern.

Aus DE—A—2 914 076, auf welcher der Obergriff des Anspruchs 4 basiert, ist eine Formschließeinheit bekannt, deren Steuereinrichtung eine Einstellung des auf das Druckkissen wirkenden Hydraulikdruckes auf zwei verschiedene, bestimmte Druckstufen erlaübt, wobei das Formwerkzeug ein elastisches, so bemessenes Element enthält, daß es bei Erhöhung von der ersten auf die zweite Druckstufe des auf des Druckkissen wirkenden Druckes noch eine dem gewünschten Spritzprägehub entsprechende Zusammendrükkung des Formwerkzeuges zuläßt.

Es besteht die Aufgabe, ein Verfahren und eine Vorrichtung zu schaffen, womit die für den Nachdruck erforderliche Kraft geringer gehalten werden kann als mit der bekannten Technik.

Gelöst wird diese Aufgabe dadurch, daß die erste Schließstellung durch eine die Schließkraft der Schließeinheit übersteigende Gegenkraft bewirkt wird, wobei die Formwerkzeughälften einen maximal 5 mm größeren Abstand voneinander aufweisen als in der endgültigen Schließstellung, und daß diese Gegenkraft zu Erreichen der endgültigen Schließstellung abgebaut wird.

Vor Beginn des Einfüllvorganges wird zur Optimierung des neuen Verfahrens vorzugsweise das Formwerkzeug in eine erste Schließstellung gefahren, bei der die Formwerkzeughälften auf einen Abstand, der zwischen 0,01 mm und 1 mm größer als der Abstand in einer zweiten Schließstellung ist, einander angenähert werden.

Dadurch wird erreicht, daß zum Einnehmen der endgülltigen Schließstellung keine zusätzlichen Kräfte — wie bei den aus den Dokumenten JP—A—6 083 820 und DE—A—2 914 076 bekannten Vorrichtungen — erforderlich sind.

Es können steife, formstabile Formwerkzeuge verwendet werden, deren Eigensteifigkeit so groß ist, daß der Formhohlraum bei Druckeinwirkung von außen oder innen keinen oder nur vernachässigbaren Verformungen unterworfen ist. Dadurch wird die Maßgenauigkeit der hergestellten Formteile jedenfalls vom Formwerkzeug her sichergestellt. Durch Fahren in die endgültige Schließstellung ist es möglich, einen höheren, gegebenenfalls regelbaren, Nachdruck aufzubauen. Dabei kann die Differenz zwischen Nachdruck und Druck während des Einfüllvorganges im Normalfalle 7 bis etwa 70 bar, erforderlichenfalls aber weit darüber bis etwa 250 bar betragen. In der Regel füllt das eingetragene Reaktionsgemisch in noch plastisch verformbaren Zustand unter dem Zuhaltedruck der Schließeinheit den Formhohlraum weitgehend aus. Durch die Bewegung der Formwerkzeughälften in die endgültige Schließstellung wird durch die damit verbundene Volumenverkleinerung des Formhohlraumes der Nachdruck erzeugt. Die Größe des Hubes zwischen der vorläufigen und der endgültigen Schließstellung und deren zeitliche Steuerung hängen von verschiedenen Faktoren ab. wie der Größe und Geometrie des Formwerkzeughohlraumes, dem evtl. Aufschäumgrad des Reaktionsgemisches und der Schwindung des chemischen Werkstoffes. So kann die endgültige Schließstellung beispielsweise erst erreicht werden, nachdem die chemische und ein Teil der physikalischen Schwindung wirksam wurden.

Vorzugsweise werden die Formwerkzeughälften in mehreren Schritten in die endültige Schließstellung gebracht.

Grundsätzlich läßt sich das neue Verfahren mit jedem verschließaren Formwerkzeug unter Benutzung einer Schließeinheit durchführen. Benötigt man während des Einfüllvorganges einen größeren Spalt, so verwendet man in vorteilhafter Weise ein sogenanntes Tauchkantenwerkzeug. solche Werkzeuge sind allgemein bekannt. Für sie ist charakteristisch, daß das Kantenprofil im Formgebungsbereich der einen Formwerkzeughälfte mit dem Kantenprofil im Formgebungsbereich der anderen Formwerkzeughälfte ein Gleitdichtung parallel zur Schließbewegung bildet. Welche Größe der zwischen den beiden Formwerkzeughälften während des Einfüllvorganges zu belassende "Spalt" haben muß, läßt sich für jedes Formwerkzeug bzw. jedes zu verarbeitende chemische System am besten durch Versuche ermitteln. Er ist also im wesentlichen von der Dicke und Dichte des resultierenden Formteils abhängig. Die zum Aufrechterhalten bzw. Schließen des "Spaltes" erforderlichen Kräfte lassen sich mechanisch, pneumatisch oder hydraulisch aufbringen. Der Fachmann wird die hydraulische Lösung bevorzugen, weil sie die flexibelste Möglichkeit zum Aufbau und zur vorwählbaren Änderung des Nachdruckes bietet, und hydraulische Energie bei den meisten Schließeinheiten sowieso zur Verfügung steht.

Die zugehörige Vorrichtung zum Herstellen von Formteilen aus einem massiven oder mikrozellularen Kunststoff, insbesondere Polyurethan bildenden, fließfähigen Reaktionsgemisch aus mindestens zwei fließfähigen Reaktionskomponenten geht aus von einer Schließeinheit mit Formwerkzeug und Mischvorrichtung für die Reaktionskomponenten, wobei jeweils eine Forwerkzeughälfte auf je einer Grundplatte der Schließeinheit angeordnet ist und dem Formwerkzeug gegen die Schließkraft der Schließeinheit wirksame Hubelemente zugeordnet sind, deren Hub begrenzbar ist.

Das Neue ist darin zu sehen, daß die Hubelemente zeitlich so steuerbar sind, daß sie nur während einer ersten Schließstellung wirksam sind.

Dadurch wird erreicht, daß die Hubelemente während des Gemischeintrages die Formwerkzeughälften in einer Position halten, welche eine entsprechende Volumenvergrößerung des Formhohlraumes gewährleistet. Als Schließeinheit für die neue Vorrichtung eignen sich im wesentlichen alle auf dem Markt erhältlichen Schließeinheiten. Auch die bekannten Formwerkzeuge mit ansetzbarer Mischvorrichtung, angebautem Mischkopf oder integriertem Mischkopf sind hierfür verwendbar. Als Hubelemente sind mechanisch spannbare Exzenterhebel, verstellbare Schraubbolzen und dergleichen denkbar.

Vorzugsweise bestehen die Hubelelemente jedoch aus Kurzhubhydraulikeinheiten mit Kolben und Zylinder.

Alternativ hierzu bestehen die Hubelemente aus Hydraulikkissen.

Beide hydraulischen Ausführungsformen gestatten das schnelle und sichere Aubringen der erforderlichen Kräfte bei leichter Eingriffsmöglichkeit für den Ablauf des Steuerprogramms.

Nach einer besonderen Ausführungsform sind die Hubelemente an der Schließeinheit angeordnet, auf einer der beiden Grundplatten befestigt und wirken gegen die andere.

Vorzugsweise sind die Hubelemente auf der einen und einstellbare Abstützelemente auf der anderen Grundplatte angeordnet.

Dadurch wird erreicht, daß die Schließeinheit für Formwerkzeuge unterschliedlicher Höhe benutzbar ist, und außerdem mittels der einstellbaren Abstützelemente die erforderliche Höhe des "Spaltes" zwischen den Formwerkzeughälften während des Gemischentrages damit einstellbar ist. Es versteht sich aber, daß die Spalthöhe auch durch andere Maßnahmen, wie beispielsweise Distanzplättchen oder unmittelbar den Hydraulikkolben zugeordnete, einstellbare Anschläge definiert werden kann.

Als Alternative sind die Hubelemente im Formwerkzeug integriert. Dieser Ausführungsform äquivalent sind Hubelemente, welche in Form von Anbausteinen gestaltet und an dem Formwerkzeug direkt befestigt sind.

Eine solche Ausführungsform ist bei größflächigen Formwerkzeugen von Vorteil, weil dann die Hubelemente möglichst nahe an den Formhohlraum gebracht werden können, wodurch die unerwünschte Verformung des Formwerkzeuges gering gehalten wird.

Vorzugsweise ist das Krafterzeugungssystem für die Hubelemente mit dem Krafterzeugungssystem für die Schließeinheit gekoppelt, und beide Systeme sind mit dem Programmgeber der Mischvorrichtung in einem Steuergerät steuerungstechnisch verbunden.

Durch diese Ausführungsform der Vorrichtung läßt sich der Verfahrensablauf automatisieren. Das Steuergerät aktiviert zunächst das Krafterzeugungssystem für die Schließeinheit und dann jenes für die Hubelemente oder auch umgekehrt. Sobalt die Formwerkzeughälften die vorläufige Schließstellung für den Eintragsvorgang eingenommen haben, wird die Mischvorrichtung betätigt und das Reaktionsgemisch in den Formhohlraum eingetragen. Nach einem vorgegebenen Zeitintervall, welches auf die zu erzeugende Gemischmenge abgestimmt ist, wird die Mischvorrichtung wieder abgeschaltet.

Ein weiteres Zeitrelais im Steuergerät ist auf ein vorgegebenes Zeitintervalle eingestellt, nach dessen Beendigung das Steuergerät das Krafterzeugungssystem der Hubelemente entlastet, wodurch aufgrund der erzeugten Schließkraft der Schließeinheit die Formwerkzeughälften in die endgültige Schließposition gebracht werden und so der gewünschte Nachdruck erzeugt wird. Eine gegebenenfalls gewünschte Änderung des Nachdruckes kann hierbei sowohl durch entsprechende, zeitliche abgestufte Regelung des hydraulischen Schließdruckes als auch des Abstützdruckes erfolgen.

Ein weiteres Zeitrelais ist auf die Aushärtezeit des Formteils eingestellt und betätigt nach dem Ablauf dieses Zeitintervalls das Krafteugungssystem der Schließeinheit zum Öffnen des Formwerkzeuges. Nach der Entnahme des Formteils kann der nächste Zyklus beginnen.

Alternativ eignen sich auch Schließeinheiten mit hydraulischem oder Kniehebel-Schließmechanismus, bei denen der Schließvorgang in zwei Stufen ablaufen kann, wobei in der zweiten Stufe hydraulische Druckkissen zum Aufbau des hohen Druckes verwendet werden.

In der Zeichnung ist die neue Vorrichtung in mehreren Ausführungsbeispielen rein schematisch im senkrechten Schnitt im Abriß dargestellt und nachstehend näher erläutert. Es zeigen:

Fig. 1 eine Vorrichtung, bei welcher als Hubelemente hydraulische Kolbenzylindereinheiten auf einer Grundplatte der Schließeinheit angeordnet sind,

Fig. 2 eine Vorrichtung, bei welcher als Hubelemente hydraulische Druckkissen auf einer Grundplatte der Schließeinheit angeordnet sind,

Fig. 3 eine Vorrichtung, bei welcher als Hubelemente hydraulische Kolbenzylindereinheiten in das Formwerkzeug integriert sind, und

Fig. 4 eine Vorrichtung, bei welcher als Hubelemente hydraulische Kolbenzylindereinheiten mit zusätzlichen Distanzplatten in das Formwerkzeug integriert sind.

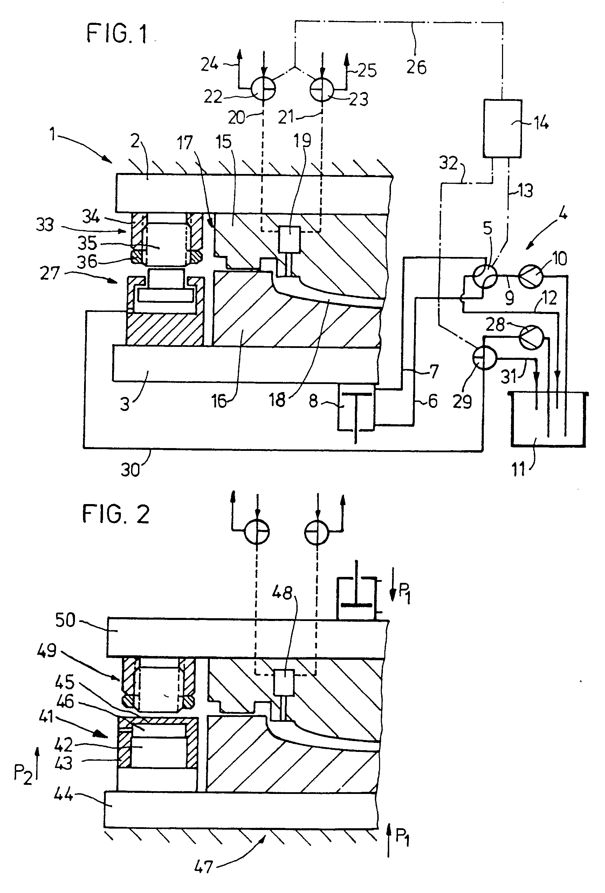

In Fig. 1 ist eine Schließeinheit 1 durch ihre beiden Grundplatten 2, 3 sowie ihr hydraulische Krafterzeugungssystem 4 angedeutet. Das Krafterzeugungssystem 4 besteht im einzelnen aus über die an ein Umschaltventil 5 über Leitungen 6, 7 angeschlossene Kolbenzylindereinheit 8. Eine Leitung 9 führt zu einer Hydraulikpumpe 10, welche aus einem Reservoir 11 ansaugt. Eine Ablaufleitung 12 führt vom Umschaltventil 5 in das Reservoir 11 zurück. Das Umschaltventil 5 ist über eine Impulsleitung 13 mit einem Steuergerät 14 verbunden.

Auf den Grundplatten 2, 3 sind die Formwerkzeughälften 15, 16 eines als Tauchkantenwerkzeug ausgebildeten Formwerkzeuges 17 aufgespannt, welche eine Formhohlraum 18 einschließen. Eine Mischvorrichtung 19 für die Vermischung der Reaktionskomponenten Polyol und Isocyanat ist andeutungsweise in die obere Formwerkzeughälfte 15 integriert dargestellt. Mischvorrichtungen dieser Art, in deren Mischkammer vorzugsweise ein Ausstoßkolben geführt ist, sind allgemein bekannt, so daß es einer nähreren Erläuterung nicht bedarf. Zur Mischvorrichtung 19 gehören auch die Zuleitungen 20, 21 mit Umschaltventilen 22, 23, von denen Rücklaufleitungen 24, 25 zu den nicht dargestellten Vorratsbehältern führen. Die Umschaltventile 22, 23 sind über eine Impulsleitung 26 mit dem Steuergerät 14 verbunden.

Auf der Grundplatte 3 sind in regelmäßigen Abständen um das Formwerkzeug 17 herum Hubelemente 27 angeordnet, von denen nur eines dargestellt ist. Sie sind als hydraulische Kolbenzylindereinheiten ausgebildet, welche mit einer Hydraulikpumpe 28 über ein mit einem Umschaltventil 29 ausgestattetes Zuleitungssystem 30 beaufschlagbar sind. Durch Betätigen des Umschaltventils 29 läßt sich die Zuleitung 30 über eine Rücklaufleitung 31 entlasten. Das Umschaltventil 29 ist über eine Impulsleitung 32 mit dem Steuergerät 14 verbunden. Den Hubelementen 27 gegenüberliegend sind auf der anderen Grundplatte 2 einstellbare Abstützelemente 33 angeordnet. Sie bestehen im einzelnen jeweils aus einer an der Grundplatte 2 befestigten Gewindehülse 34, in welcher ein mit Gewinde versehenere Abstützbolzen 35 geführt ist. Ihm ist eine Kontermutter 36 zugeordnet. Mit dieser Kontermutter 36 läßt sich die Höhe des wirksamen Endes des Abstützbolzens 35 auf die Höhe des Formwerkzeuges 17 abstimmen und gleichzeitig die Position der vorläufigen Schließstellung, welche die Höhe des Formhohlraumes 18 vor dem Einsetzen des Nachdruckes bestimmt, einstellen.

Bei der Ausführung der Vorrichtung gemäß Fig. 2 sind gegenüber der Ausführungsform nach Fig. 1 lediglich die als Hubelemente dienenden Hydraulikzylindereinheiten durch hydraulische Druckkissen 41 ersetzt. Jedes Druckkissen 41 besteht aus einem Verschlußkolben 42 mit Gehäuse 43, welche beide an der Grundplatte 44 befestigt sind. Das Gehäuse 43 besitzt jeweils eine elastisch verformbare Stirnwand 45, welche sich entsprechend ausbaucht, wenn der darunter befindliche Hydraulikraum 46 mit Druck beaufschlagt wird. Die nicht dargestellten Krafterzeugungssysteme für die Hubelemente 41 und die Schließeinheit 47 sowie das Steuergerät und die Mischvorrichtung 48 entsprechenden dem Aufbau gemäß Fig. 1. Auch hier sind gleichartig aufgebaute Abstützelemente 49 an der anderen Grundplatte 50 angeordnet. Ihr Aufbau entspricht dem der in Fig. 1 dargestellten Abstützelemente.

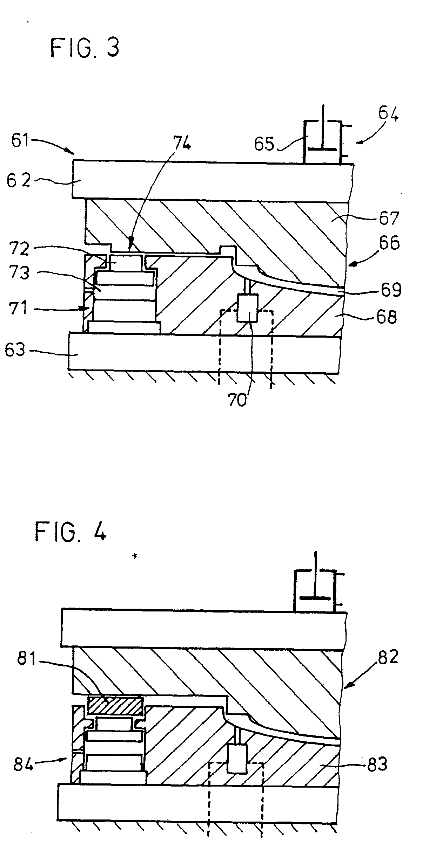

Die Auführungsform der Vorrichtung gemäß Fig. 3 entspricht im Prinzip derjenigen gemäß Fig. 1 mit der Abweichung, daß die Hubelemente in das Formwerkzeug intergriert sind:

Die Vorrichtung besteht aus einer Schließeinheit 61 mit Grundplatten 62, 63. Ein Krafterzeugungssystem 64 ist durch einen hydraulischen Kolben mit Zylinder 65 angedeutet. In der Schließeinheit 61 ist zwischen den Grundplatten 62, 63 ein Formwerkzeug 66 angeordnet, welches aus den Formwerkzeughälften 67, 68 besteht, zwischen denen ein Formhohlraum 69 eingeschlossen ist. Eine Mischvorrichtung 70 ist in der unteren Formwerkzeughälfte 68 integriert. Außerdem sind darin noch als Kolbenzylindereinheiten 71 ausgebildete Hubelemente eingebaut, von denen nur eines dargestellt ist. Hinter dem Kurzhubkohl en 72 ist ein Hydraulikraum 73 angeordnet. Das Krafterzeugungssystem für die Hubelemente 71 und das Steuergerät mit Steuerungssystem sind nicht dargestellt und entsprechen demjenigen gemäß Fig. 1. Der Kurzhubkohlen 72 arbeitet direkt auf eine Abstützfläche 74 der oberen Formwerkzeughälfte 67.

Bei der Ausführungsform der Vorrichtung gemäß Fig. 4 ist zusätzlich eine Distanzplatte 81 vorgesehen, welche der Trennebene des Formwerkzeuges 82 gegebenenenfalls rundum verlauft und in einer entsprechenden Nut der unteren Formwerkzeughälfte 83 abdichtend geführt ist. Die Hubelemente 84 arbeiten direkt auf die Distanzplatte 81. Anstonsten entspricht der Aufbau dieser Vorrichtung derjenigen gemäß Fig. 1.

**Patentansprüche**

1. Verfahren zum Herstellen vom Formteilen aus einem massiven oder mikrozellularen Kunststoff, insbesondere Polyurethan bildenden, fließfähigen Reaktionsgemisch aus mindestens zwei fließfähigen Reaktionskomponenten, wobei ein Formwerkzeug (17, 66, 82) mittels einer zugeordneten Schließeinheit (1, 47, 61) in eine erste Schließstellung gefahren wird, in welcher die Formwerkzeughälften (15; 16, 67; 68, 83) größeren Abstand voneinander aufweisen als in einer zweiten, endgültigen Schließstellung, wobie während dieser ersten Schließstellung das Reaktionsgemisch in den Formhohlraum, (18, 69) eingetragen wird und nach beendetem Eintrag durch Fahren der Formwerkzeughälften (15; 16, 67; 68, 83) in die endgültige Schließstellung einer höherer Druck im Formhohlraum (18, 69) aufgebaut wird als während des Eintragvorganges darin herrschte, und wobei das Formwerkzeug (17, 66, 82) bis zur Beendigung des Aushärtevorganges des Formteils geschlossen gehalten, dann geöffnet und das Formteil entnommen wird, dadurch gekennzeichnet, daß die erste Schließstellung durch eine die Schließkraft der Schließeinheit übersteigende Gegenkraft bewirkt wird, wobei die Formwerkzeughälften (15; 16, 67; 68, 83; einen maximal 5 mm größeren Abstand voneinander aufweisen als in der endgültigen Schließstellung, und daß diese Gegenkraft zum Erreichen der endgültigen Schließstellung abgebaut wird.

2. Verfahren nach Anspruch 1, dadurch gekennzeichnet, daß das Formwerkzeug (17, 66, 82) in eine erste Schließstellung gefahren wird, bei der die Formwerkzeughälften (15; 16, 67; 68, 83) auf einen Abstand, der zwischen 0,01 mm und 1,0 mm größer als der Abstand in einer zweiten Schließstellung ist, einander angenähert werden.

3. Verfahren nach Anspruch 1 oder 2, dadurch gekennzeichnet, daß die Formwerkzeughälften (15; 16, 67; 68, 83) in mehreren Schritten in die endgültige Schließstellung gebracht werden.

4. Vorrichtung zur Herstellen von Formteilen aus einem massiven oder mikrozellularen Kunststoff, insbesondere Polyurethan bildenden, fließfähigen Reaktionsgemisch aus mindestens zwei fließfähigen Reaktionskomponenten, bestehend aus einer Schließeinheit (1, 47, 61) mit Formwerkzeug (17, 66, 82) und Mischvorrichtung (19, 48, 70) für die Reaktionskomponenten, wobei jeweils eine Formwerkzeughälfte (15; 16, 67; 68, 83) auf je einer Grundplatte (2; 3, 44; 50, 62; 63) der Schließeinheit (1, 47, 61) angeordnet ist und dem Formwerkzeug (18, 67, 82) gegen die Schließkraft der Schließeinheit (1, 47, 61) wirksame Hubelemente (27, 41, 71, 84) zugeordnet sind, deren Hub begrenzbar ist, dadurch gekennzeichnet, daß die Hubelemente (27, 41, 71, 84) zeitlich so steuerbar sind, daß sie nur während einer ersten Schließstellung wirksam sind.

5. Vorrichtung nach Anspruch 4, dadurch gekennzeichnet, daß die Hubelemente (27, 71, 84) aus Hydraulikeinheiten mit Kolben und Zylinder bestehen.

6. Vorrichtung nach Anspruch 5, dadurch gekennzeichnet, daß die Hubelemente (41) aus hydraulischen Druckkissen bestehen.

7. Vorrichtung nach einem der Ansprüche 4 bis 6, dadurch gekennzeichnet, daß die Hubelemente (27, 41) an der Schließeinheit (1, 47) angeordnet sind.

8. Vorrichtung nach Anspruch 7, dadurch gekennzeichnet, daß die Hubelemente (27, 41) auf der einen Grundplatte (3, 44) der Schließeinheit (1, 47) und einstellbare Abstützelemente (33, 49) auf der anderen Grundplatte (2, 50) angeordnet sind.

9. Vorrichtung nach einem der Ansprüche 4 bis 8, dadurch gekennzeichnet, daß das Krafterzeugungssystem (28; 29; 30) für die Hubelemente (27, 33, 41, 49, 71, 84) mit dem Krafterzeugungssystem (4, 8, 64) für die Schließeinheit (1, 47, 61) gekoppelt ist und beide Systeme mit dem Programmgeber der Mischvorrichtung (19, 48, 70) in einem Steuergerät (14) verbunden sind.

**Revendications**

1. Procédé de fabrication de pièces moulées à partir d'une matière plastique massive ou microcellulaire, en particulier à partir d'un mélange réactionnel fluide, formant du polyuréthanne, constitué par au moins deux composants réactionnels fluides, un outil de moulage (17, 66, 82) étant amené à l'aide d'une unité de fermeture (1, 47, 61) associé dans une première position de fermeture dans laquelle les moitiés d'outil de moulage (15; 16, 67; 68, 83) présentent une plus grande distance l'une par rapport à l'autre que dans une seconde position de fermeture finale, le mélange réactionnel étant introduit dans la cavité (18, 69) du moule dans cette première position de fermeture et, lorsque l'introduction est terminée, le déplacement des moitiés d'outil de moulage (15; 16, 67; 68, 83) dans la position de fermeture finale produisant dans la cavité (18, 69) du moule une pression plus élevée que celle qui y régnait pendant le processus d'introduction, et l'outil de moulage (17, 66, 82) étant maintenu fermé jusqu'à la fin du processus de durcissement de la pièce moulée, puis étant ouvert, et la pièce moulée étant retirée, caractérisé en ce que la première position de fermeture est obtenue par une force antagoniste qui est supérieure à la force de fermeture de l'unité de fermeture, les moitiés d'outil de moulage (15; 16, 67; 68, 83) présentant une distance l'une de l'autre plus grande d'au maximum 5 mm que dans la position de fermeture finale, et en ce que cette force antagoniste est supprimée pour atteindre la position de fermeture finale.

2. Procédé selon la revendication 1, caractérisé en ce que l'outil de moulage (17, 66, 82) est amenée dans une première position de fermeture dans laquelle les moitiés d'outil de moulage (15; 16, 67; 68, 83) sont rapprochées l'une de l'autre jusqu'à une distance qui est plus grande de 0,01 mm à 1 mm que la distance dans une deuxième position de fermeture.

3. Procédé selon la revendication 1 ou 2, caractérisé en ce que les moitiés d'outil de moulage (15; 16, 67; 68, 83) sont amenées dans la position de fermeture finale en plusieurs étapes.

4. Dispositif de fabrication de pièces moulées à partir d'une matière plastique massive ou microcellulaire, en particulier à partir d'un mélange réactionnel fluide, formant du polyuréthanne, constitué par au moins deux composants réactionnels fluides, consistant en une unité de fermeture (1, 47, 61) avec un outil de moulage (17, 66, 82) et un dispositif de mélange (19, 48, 70) pour les composants réactionnels, une moitié d'outil de moulage (15; 16, 67; 68, 83) étant disposée à chaque fois sur une plaque de base (2; 3, 44; 50, 62; 63) de l'unité de fermeture (1, 47, 61) et des éléments de levage (27, 41, 71, 84), dont la course est limitable, et qui agissent contre la force de fermeture de l'unité de fermeture (1, 47, 61), étant associés à l'outil de moulage (18, 67, 82), caractérisé en ce que les éléments de levage (27, 41, 71, 84) peuvent être commandés temporellement de telle façon qu'ils ne sont actifs que dans une première position de fermeture.

5. Dispositif selon la revendication 4, caractérisé en ce que les éléments de levage (27, 71, 84) consistent en des unités hydrauliques avec piston et cylindre.

6. Dispositif selon la revendication 5, caractérisé en ce que les éléments de levage (41) consistent en des coussins de pression hydrauliques.

7. Dispositif selon l'une des revendications 4 à 6, caractérisé en ce que les éléments de levage (27, 41) sont disposés sur l'unité de fermeture (1, 47).

8. Dispositif selon la revendication 7, caractérisé en ce que les éléments de levage (27, 41) sont disposés sur une plaque de base (3, 44) de l'unité de fermeture (1, 47) et des éléments de soutien (33, 49) réglables sont disposés sur l'autre plaque de base (2, 50).

9. Dispositif selon l'une des revendications 4 à 8, caractérisé en ce que le système de production de force (28; 29; 30) pour les éléments de levage (27, 33, 41, 49, 71, 84) est couplé au système de production de force (4, 8, 64) pour l'unité de fermeture (1, 47, 61) et les deux éléments sont reliés au transmetteur de programme du dispositif de mélange (19, 48, 70) dans un appareil de commande (14).

**Claims**

1. A process for the production of mouldings from a free-flowing reaction mixture — forming a solid or microcellular plastic, more especially polyurethane — of at least two free-flowing reaction components, a mould (17, 66, 82) being moved by means of an associated clamping unit (1, 47, 61) into a first closed position in which the mould halves (15; 16, 67; 68, 83) are at a greater distance from one another than in a second, final closed position, the reaction mixture being introduced into the mould cavity (18, 69) during this first closed position and, on completion of its introduction, a higher pressure being built up in the mould cavity (18, 69) than prevailed therein during introduction of the reaction mixture by movement of the mould halves (15; 16, 67; 68, 83) into the final closed position, and the mould (17, 66, 82) being kept closed until curing of the moulding is complete and then opened and the moulding removed, characterized in that the first closed position is brought about by a counter-force which exceeds the clamping force of the clamping unit, the mould halves (15; 16, 67; 68, 83) being at most 5 mm further apart from one another than in the final closed position and in that this counter-force is dissipated to reach the final closed position.

2. A process as claimed in claim 1, characterized in that the mould (17, 66, 82) is moved into a first closed position in which the mould halves (15; 16, 67; 68, 83) are brought together so that the interval between them is 0.01 mm to 1.0 mm greater than the interval between them in a second closed position.

3. A process as claimed in claim 1 or 2, characterized in that the mould halves (15; 16, 67; 68, 83) are brought into the final closed position in several steps.

4. A machine for the production of mouldings from a free-flowing reaction mixture — forming a solid or microcellular plastic, more especially polyurethane — of at least two free-flowing reaction components, consisting of a clamping unit (1, 47, 61) with a mould (17, 66, 82) and a mixing unit (19, 48, 70) for the reaction components, each mould half (15; 16, 67; 68,83) being arranged on a separate base plate (2; 3, 44; 50, 62; 63) of the clamping unit (1, 47, 61) and stroke-limited lift elements (27, 41, 71, 84) active against the clamping force of the clamping unit (1, 47, 61) being associated with the mould (18, 67, 82), characterized in that the lift elements (27, 41, 71, 84) are designed to be time-controlled so that they are only active in a first closed position.

5. A machine as claimed in claim 4, characterized in that the lift elements (27, 71, 84) consist of hydraulic units with pistons and cylinders.

6. A machine as claimed in claim 5, characterized in that the lift elements (41) consist of hyraulic pressure pads.

7. A machine as claimed in any of claims 4 to 6, characterized in that the lift elements (27, 41) are arranged on the clamping unit (1, 47).

8. A machine as claimed in claim 7, characterized in that the lift elements (27, 41) are arranged on one base plate (3, 44) of the clamping unit (1, 47) and adjustable support elements (33, 49) are arranged on the other base plate (2, 50).

9. A machine as claimed in any of claims 4 to 8, characterized in that power-generating system (28; 29; 30) for the lift elements (27, 33, 41, 49, 71, 84) is coupled to the power-generating system (4, 8, 64) for the clamping unit (1, 47, 61) and both systems are connected to the programmer of the mixing unit (19, 48, 70) in a control unit (14).

FIG. 1

FIG. 2

FIG. 3

FIG. 4